# EUROPEAN PATENT SPECIFICATION

(11) **EP 3 528 916 B1**
(45) Date of publication and mention of the grant of the patent: **25.11.2026**
(21) Application number: 17791862.0
(22) Date of filing: 17.10.2017
(51) Int. Cl.: B01D 21/01, C02F 1/52

(54) **DEVICE TO SEPARATE WATER AND SOLIDS OF SPRAY WATER IN A CONTINUOUS CASTER, AND METHOD TO MONITOR AND CONTROL CORROSION BACKGROUND**
VORRICHTUNG ZUR TRENNUNG VON WASSER UND FESTSTOFFEN VON SPRITZWASSER IN EINER STRANGGIESSANLAGE SOWIE VERFAHREN ZUR ÜBERWACHUNG UND STEUERUNG VON KORROSION
DISPOSITIF POUR SÉPARER L'EAU ET LES SOLIDES D'EAU DE PULVÉRISATION DANS UNE INSTALLATION DE COULÉE CONTINUE, ET PROCÉDÉ POUR SURVEILLER ET CONTRÔLER UN FOND DE CORROSION

(30) Priority: 18.10.2016 US 201662409853 P
(43) Date of publication of application: 28.08.2019
(73) Proprietor: Ecolab USA Inc., St. Paul, MN 55102 (US)
(72) Inventor: ROCA, Laia, More, 2316 PS Leiden (NL); MOHAMMED, Ashraf, 80337 Muenchen (DE); SERRANO, Paloma, Lopez, 2611 RJ Delft (NL); LERRICK, Andrew, Edwin, 2622 LS Delft (NL); DE GRAAF, Peter, 1074 VK Amsterdam (NL)
(74) Representative: Godemeyer Blum Lenze Patentanwälte Partnerschaft mbB - werkpatent
(86) International application number: PCT/US2017/056908
(87) International publication number: WO 2018/075471

(56) References cited:
- JP-A- 2003 220 392
- JP-A- 2014 237 122
- KR-B1- 101 086 315
- US-A- 5 647 996
- US-B1- 6 270 679
- US-B1- 6 274 045

## Description

### TECHNICAL FIELD

The disclosure relates generally to metal manufacturing. More specifically, the disclosure relates to a device and method that monitors and separates particles from spray water of a spray chamber in a continuous metal caster.

### BACKGROUND

Continuous casting is a method of converting molten metal into semi-finished metal products such as billets, blooms, or slabs, and is useful for high volume and continuous production. The process is commonly used to form steel, but may be used to form other metals, such as aluminum and copper. Typically in continuous casting, molten metal is collected in a trough called a tundish and then passed at a precisely controlled rate into a primary cooling zone. In the primary cooling zone, the molten metal enters a solid mold (frequently made of copper, and often water-cooled). The solid mold draws heat from the molten metal causing a solid "skin" of metal to form around a still liquid core. The solid clad liquid metal is referred to as a strand.

Typically, the strand then passes into a secondary cooling zone and passes through a spray chamber where a cooling medium (e.g., water) is sprayed to further cool the metal. Examples of spraying technology used in spraying chambers are described in U.S. Patent Nos. 4,699,202, 4,494,594, 4,444,495, 4,235,280, 3,981,347, 6,360,973, 7,905,271, and 8,216,117. After passing through the spray chamber, the metal further solidifies and may be cut into billets, blooms or slabs for shipping.

JP 2014 237122 discloses a coagulation sedimentation equipment with: a first agitation tank for adding an inorganic coagulant to a raw water to mix while agitating; a second agitation tank for adding a polymer coagulant and a sedimentation accelerator comprising an insoluble particulate to the raw water to mix while agitating; a flocculation tank for forming floc including the accelerator as a core; a sedimentation tank for precipitating the floc to divide the raw water into a treated water and a slurry; and a cyclone for dividing the slurry extracted from the sedimentation tank into a sludge and the accelerator and for feeding the divided accelerator to the second agitation tank. The outlet line of a cyclone upper part is branched into a sludge discharge line and a sludge returning line for returning at least a part of the sludge to the first agitation tank, and at least either flow of the sludge discharge line or the sludge returning line is controlled so that the pollution load of the first agitation tank becomes a constant value. JP 2003 220392 refers to a method for treating a recirculated fine-iron-particle- containing water comprising the cation addition step of adding a cationic polymer coagulant to the recirculated fine-iron-particle-containing water; and the separation step of injecting the recirculated water to which the coagulant has been added into a coagulation sedimentation tank (61) through a plurality of injection ports (65a) of a distributor (65) arranged in the lower part inside the tank (61), and of catching and sedimentating the flocks formed in the recirculated water through the coagulated flock layer (A) in the tank (61). US 6 274 045 and US 6 270 679 refer to methods for recovering and separating precious and non-precious metals from waste streams, which removes, separates, and recovers such metals in a cost effective manner with more than 95% removal from waste streams and with minimal amounts of unprocessed solids and sludge remaining in the environment. US 5 647 996 describes method and apparatus for the removal of total cyanide from aqueous solution. The method includes the steps of placing the aqueous solution into a reaction tank, adding lime, ferrous sulfate, and acid to the solution in the reaction tank and agitating the resultant mixture for a reaction time of about one hour.

The environment in a continuous caster, including the spray chamber, can be highly corrosive. Corrosive conditions are associated with poor quality metal production, lost production time, increased maintenance costs and downtime, damage to the caster and pipes, and increased safety risks to operators.

Conditions in the caster may be monitored to determine optimal metal (e.g., steel) manufacture and avoid breaks in production. Monitoring conditions in the upper zone of the spray chamber is complicated, however, by extreme high temperatures (e.g., above 1,500 °C), extreme pH, inaccessibility to this zone during production, and the presence of particulate debris from the metal production that have a high tendency to agglomerate.

There is a need for alternative solutions to reduce corrosion and remove particle debris formed in spray chambers of continuous casters. Additionally, a need exists for improved systems and methods for monitoring spray chambers during operation.

Discussion of any references in this patent application provides context for the present disclosure and is not an admission that any such reference or references constitutes "prior art" to the claimed invention.

### BRIEF SUMMARY

A system is disclosed for treating cooling fluid in a continuous metal casting process having a spray chamber according to the claims.

The system includes a first compartment with an intermittently operable outlet with an open state and a closed state, for removing particulate matter, and a second compartment that receives particle-free fluid from the first compartment. The outlet includes a valve. In some embodiments, a first compartment has a tapered, conical, funnel, pyramidal shape or otherwise narrowed shape that facilitates settling of the particles. Particle-free fluid may be recycled to the spray chamber.

In some embodiments, one or more sensors measure at least one property of the particle-free fluid, such as corrosivity, pH, or temperature. The one or more sensors and outlet (with or without a valve) may be in communication with a controller, the controller actuated algorithmically to determine the opened or closed state of the outlet.

In one aspect, a method is disclosed for treating cooling fluid in a continuous metal casting process having a spray chamber according to the claims.

The method comprises configuring a first compartment to a spray chamber, the first compartment having an outlet intermittently operable between an opened state and a closed state; receiving cooling fluid in the first compartment; settling particulate matter from the cooling fluid and opening the outlet to remove the particulate matter; flowing the particle-free fluid to a second compartment including one or more sensors to measure at least one property of the particle-free fluid; measuring the at least one property of the particle-free fluid; when the at least one property is outside of an acceptable range, and varying the amount of a chemical flowing into the cooling fluid or the particle-free fluid. In some embodiments, a first compartment has a tapered, conical, funnel, pyramidal shape or otherwise narrowed shape that facilitates settling of the particles.

In some embodiments, the system and methods indirectly reduce corrosion in spray chambers.

In another aspect, the present disclosure relates to the use of a system for treating cooling fluid in a continuous metal casting process having a spray chamber according to claim 12.

The foregoing has broadly outlined the features and technical advantages of the present disclosure in order that the detailed description that follows may be better understood. Additional features and advantages of the disclosure will be described hereinafter that form the subject of the claims of this application.

### BRIEF DESCRIPTION OF THE DRAWINGS

A detailed description of the invention is hereafter described with specific reference to the following drawings, in which:
Figures 1 and 2 are generalized process diagrams illustrating embodiments of the invention.
Figure 3 is an illustration showing parts of a caster monitoring system, according to some embodiments of the invention.
Figures 4 and 5 are illustrations showing an enlargement of the two-compartment design of a caster monitoring system, as shown in FIG. 3, according to some embodiments of the invention.
Figure 6 is a graph showing pH and temperature in water obtained from the upper (top) zone of a continuous metal caster, using an embodiment of the disclosed system.
Figure 7 is a graph showing pH, online corrosion, and temperature in water obtained from the upper (top) zone of a continuous metal caster, using an embodiment of the disclosed system.
Figure 8 is a graph correlating temperature monitored inside a settling tank (first compartment) and production status, using an embodiment of the disclosed system.
Figure 9 is a graph showing temperature inside the monitoring system using an embodiment of the disclosed system.

### DETAILED DESCRIPTION

The disclosure relates to systems, devices, and methods useful for reducing corrosion in continuous metal (including steel) casters, with the aim of reducing the total cost of operation. A system is disclosed for sampling spray water from a spray chamber of a continuous metal caster, monitoring the spray water for corrosivity and other parameters, and removing debris.

It is thus a goal of the invention to reduce corrosion in a metal caster and to extend the period of continuous operation before maintenance is required. In order to limit corrosion in continuous metal casters, it is important to regularly monitor the water in the upper zone of the spray chamber. Continuous monitoring provides real-time information about conditions in the caster which can be used to adjust the dosage of chemicals to locally control corrosion. Extreme conditions in the caster make direct monitoring difficult, however.

Another complication of metal casting is the formation of particulate debris (sometimes called sinter), which has a tendency to agglomerate, eroding, the caster and associated conduits. Periodic equipment shutdown is required to remove this debris, further reducing production efficiency. Furthermore, this debris fouls monitoring equipment, reducing the ability to monitor and regulate conditions in the caster in real time.

Thus, in one aspect, a system is disclosed for continuously sampling spray water from the upper zone of a spray chamber, monitoring corrosivity, and removing debris from the spray water. An outlet facilitates periodic removal of the settled particulate matter. The outlet may be intermittently operable, having an opened state and a closed state. The opened state and closed state may be regulated using a valve. The valve may be a pinch-type valve. The open state and closed state of the outlet and adjustment of conditions in the spray chamber can be automated and controlled using algorithms. Using the system disclosed herein, sampling, monitoring, and particle removal may be conducted during operation of a metal caster, allowing continuous operation of the caster.

Reference herein to a continuous metal caster or continuous metal casting is understood to include and encompass any form of metal casting suitable for the disclosed systems and methods, including continuous casting of steel, aluminum, copper, or any other metal so produced.

As used herein, the term "spray water" means water used as a cooling fluid in a continuous metal caster. More specifically, "spray water" refers to water used in a spray chamber of a continuous metal caster, though it may also refer to water used as a cooling fluid in other parts of the caster. The term "cooling fluid" or "cooling medium" is thus used interchangeably with the term "spray water" in some parts of the disclosure.

As used herein, the term "particle free fluid" means cooling fluid that has been processed such that most or all of the insoluble particles and sinter material in the cooling fluid have been removed, particularly cooling fluid that has been used in a spray chamber and subsequently processed to remove such particles. It is understood that "particle-free" fluid may retain some particulate matter and/or sinter material, but at significantly lower levels than a corresponding cooling fluid obtained from the same caster prior to settling and removal of particles.

As used herein, the term "treated fluid" may refer to fluid that has been modified by addition or removal of agents to alter its chemical composition. More specifically, "treated fluid" may be used herein to refer to cooling fluid that has been treated by varying the amount of a chemical in a cooling fluid, as further detailed herein

As used herein, the term "first compartment" may be used interchangeably with the terms "settling compartment" or "settling tank" and, unless otherwise specified, refers to the compartment in which particulate matter separates or settles from spray water, and can subsequently be collected, according to the disclosed system and methods.

As used herein, the term "second compartment" may be used interchangeably with the terms "sensor compartment" or "sensor tank" and, unless otherwise specified, is the compartment in which various parameters, such as temperature, pH, and corrosion, are measured in the spray water (generally now particle-free) according to the disclosed system and methods.

While a first compartment and a second compartment may be generally described as chambers or tanks, it is also understood that a pipe or pipes, a rack (e.g. a series of bent pipes of various configuration), or other generally hollow structure may be used according to certain embodiments herein, in keeping with the overall purpose of the invention.

Various parameters are appropriate for monitoring in spray water obtained from a spray chamber. These parameters include pH, temperature, corrosion rate, conductivity, oxidation/reduction potential, biocide concentration, turbidity, flow, dissolved oxygen, total suspended solids, ion concentration, and total dissolved solids. For example, local drops in pH in the upper zone of the spray chamber are common in metal casting, and are associated with increased corrosion potential in this zone.

It is understood that additional compartments may be utilized according to the systems and methods disclosed herein, either between a settling compartment and a sensor compartment, or in other areas of the system (e.g., for collecting particulate matter as it leaves a first compartment). In addition, each of the first compartment and second compartment, as defined hereinabove, may themselves be subdivided into sub-compartments.

The present disclosure provides several advantages over the art, including longer periods of continuous, autonomous operation of a metal caster, as compared to traditional casting systems. For example, use of the systems and methods disclosed herein may permit autonomous operation for 30 days or more, with minimal accumulation of sinter in the sampling equipment. Similarly, the systems and methods disclosed may permit continuous and reliable monitoring of a variety of important operational parameters for 30 days or more. The disclosed systems and methods may detect production stops based on such parameters as temperature measurements, fluid volume, fluid weight, flow rate, and turbidity. Significantly, monitoring can be tied to automatic controllers that remove particulate debris and add agents needed to adjust conditions in the caster/spray chamber, with minimal need for user intervention. In certain embodiments, the controllers are actuated using algorithms and/or computerized models, reducing the need for human intervention.

In one embodiment, a system is disclosed for treating cooling fluid in a continuous metal casting process having a spray chamber, the system comprising a first compartment fluidly coupled to the spray chamber, the first compartment including an outlet having an open state and a closed state, the outlet intermittently operable to remove particulate matter and cooling fluid from the first compartment when the outlet is in the open state and to retain particulate matter and cooling fluid in the first compartment when the outlet is in the closed state; and a second compartment fluidly coupled to the first compartment, the second compartment operable to receive particle-free fluid from the first compartment.

In some embodiments, the first compartment thus functions as a settling tank for particulate matter contained in the spray water. Particulate matter settles in the first compartment/settling tank and may be drained (i.e., removed) at various intervals to prevent clogging.

In some embodiments according to the invention, a valve is used to regulate the open state and closed state at the outlet and to remove particulate matter from a first compartment. The valve is intermittently operable, with an open position and a closed position. The valve can thus be opened as particulate matter accumulates in the first chamber. Both particulate matter and cooling fluid are removed from the first compartment when the valve is in the open position.

In some embodiments according to the invention, the system is configured to allow a particle-free fluid to flow from a first compartment to a second compartment. In particular embodiments, flow of the particle-free fluid involves overflow of a particle-free fluid from the first compartment to the second compartment. For example, a particle-free fluid may fill a first compartment or reach a threshold level (*e.g.*, "fill point") within the first compartment, at which stage particle-free fluid passes into one or more separate conduits, hoses, channels, pipes, or openings in fluid communication with a second compartment. The fluid at the upper end of the first compartment is expected to be relatively free of large and/or insoluble particles. In other embodiments, a particle-free fluid is routed from the first compartment into a second compartment.

In some embodiments, particle-free fluid overflows the first compartment as the first compartment reaches a fill point, and into a second compartment. Overflow has the advantage of being a simple and efficient mechanism for transferring particle-free fluid from the first compartment, while requiring minimal user intervention and energy expenditure. Overflow may be carried out after or while separating higher density particles (higher than water), for example, at the base of a first compartment. A rotatable bounded plate may be implemented to ensure separation of metal particles from the main stream. Overflow also has an advantage of providing a sample stream to monitor, allowing subsequent treatment of cooling fluid in or directed to the spray chamber. In certain embodiments, cooling fluid in the disclosed system is treated after leaving a first compartment and then recycled back to the spray chamber.

In some embodiments, a first compartment has a tapered, conical, funnel, pyramidal shape or otherwise narrowed shape that facilitates settling of the particles. Narrowing of the shape of the first compartment, particularly at the bottom section of the first compartment, helps heavier particles to collect near an outlet, where the particles may then be removed as, for example, by opening an outlet (e.g., a valve). The design may facilitate a self-cleaning function for the first compartment and provide certain advantages of convenience, low maintenance, and ease of use.

In some embodiments, a second compartment is in communication with one or more sensors operable to measure at least one property of the particle-free fluid. The at least one property may include conductivity, pH, oxidation/reduction potential, corrosion, biocide concentration, turbidity, temperature, flow, dissolved oxygen, total suspended solids, ion concentration, and total dissolved solids. Ion concentration may be measured using methods known in the art, including ion-sensitive probes (ISE sensors).

While various embodiments disclosed herein illustrate a first compartment disposed in series with (e.g., next to or adjacent to) a second compartment, a first compartment and a second compartment may also be arranged in other configurations consistent with the present disclosure. For example, a first compartment and a second compartment may be concentrically arranged, with a first compartment occupying an internal ring and a second compartment occupying an external concentric ring, or with a first compartment occupying an external ring and a second compartment occupying an internal concentric ring.

In some embodiments, a particle-free fluid is periodically withdrawn from a first compartment as a set volume of cooling fluid in the first compartment is reached, or as another desired parameter or parameters are reached. For example, a particle-free fluid may be withdrawn periodically (*e.g*., timed intervals, continuous, or manually determined). Monitoring of the system may be used to determine when to withdraw a particle-free fluid from a first compartment. In some embodiments, a valve is operably linked to a conduit, channel, pipe, or other opening in fluid communication with a second compartment, the valve controlled by a second controller under manual or automatic control.

In some embodiments, sensor readings are used to prompt the system to inject chemicals into the spray water to vary any of the measured properties of the spray water before returning it to the spray chamber. Sensor readings can also be used to adjust various operational parameters of the continuous metal caster, including conditions in the spray chamber, to maintain optimal and continuous operation.

The disclosed system can maintain the spray water properties within desired ranges autonomously for extended periods (e.g., 30 or more days).

In some embodiments, the pinch valve is operably linked to a controller. The controller may be automated. In this way, the first chamber may be automatically self-flushing.

In certain embodiments, one or more algorithms are used to analyze one or more parameters measured in the system and/or the metal caster, the algorithms determining appropriate times to open and close the outlet of the first compartment, add chemicals to the spray water, or otherwise adjust the operating conditions of the system and/or the metal to the cooling fluid, or otherwise regulate conditions in the system and/or metal caster. The algorithms may be operationally associated with the controller and other parts of the system and/or metal caster, with the goal of maintaining continuous operation of the metal caster for extended periods with minimal user intervention. The opening and closing function may be actuated, for example, using algorithms that correlate flow rate and/or temperature data from the first compartment and second compartment and adjust the frequency of duration of opening and closing accordingly.

Some embodiments of the invention are further described below. These embodiments are provided for illustration purposes only and are not intended to limit the scope of the invention in any way. Alternative embodiments may exist within the claimed invention, as defined more specifically in the attached claims.

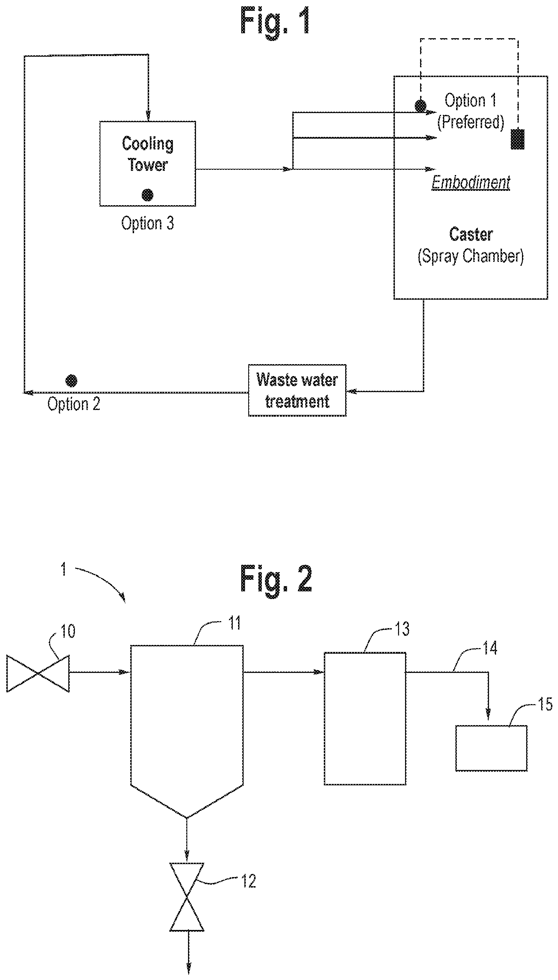

Referring to Figure 1, a system is described for treating cooling fluid in a continuous metal casting process. In the system, fresh spray water passes into a spray chamber-caster via a feedline and spray lines. Spray water from the upper (i.e., "top") zone of the spray chamber is collected by a water collector and directed to a monitoring system via a conduit. The monitoring system includes a first compartment for settling particulates and a second compartment for monitoring various parameters in the particle-free fluid (discussed further hereafter).

A stream passing from the monitoring system and containing relatively particle-free water or particle-free water laden with debris may be joined with a discharge stream exiting a lower end of the spray chamber and containing high particle content, with the combined stream passing into a waste-water treatment area and potentially a sand filter for further treatment. The resulting stream may then be passed into a cooling tower for potential recycling back to the spray chamber.

Various parameters, such as temperature, volume, turbidity and particle concentration, may be measured within the monitoring system and converted into an electrical signal. A controller may be used to actuate addition of a chemical at one of various locations along the fluid path described herein (Option 1, Option 2, or Option 3 of FIG. 1). Preferably, chemical addition occurs in the spray lines (Option 1), but chemicals may also be added following water treatment and filtration, or within the cooling tower.

Figure 2 generally describes system 1 for treating cooling fluid in a continuous metal casting process. In system 1, spray water from the upper (i.e., "top") zone of a spray chamber of a continuous metal caster is directed to first compartment 11 via conduit 10. An outlet (e.g., valve) with an open position and a closed position may be used to determine when to permit flow of the spray water into system 1. The valve may be automated or manually controlled.

First compartment 11 serves as a settling compartment, allowing particulate matter to separate from the cooling fluid. First compartment 11 is generally conical-shaped or pyramidal-shaped to facilitate settling and collection of particulate matter at the bottom of the compartment. First compartment 11 is fluidly connected to an outlet, such as a valve, which may be a pinch valve 12, having an open position and a closed position. Pinch valve 12 is intermittently operable to remove particulate matter and cooling fluid from the base of first compartment 11 when pinch valve 12 is in the open position and to retain particulate matter and cooling fluid in first compartment 11 when pinch valve 12 is in the closed position. Pinch valve 12 may be automated. As used herein, "automated pinch valve" refers to a valve that is operable without human intervention. Pinch valve 12 may be opened and closed at regular, timed intervals based on a preset program, or may be opened and closed based on measured parameters in the continuous steel caster or system 1. Pinch valve 12 may also be controlled by a control board (not shown). Particulate matter may thus periodically be removed from first compartment 11 by the operation of pinch valve 12 for later storage or disposal, with little or no intervention required from a human operator. While pinch valve 12 does not require human intervention, it may be operated or overridden by a human and still be considered "automated," particularly where its operation does not necessarily require such intervention.

By opening and closing at particular intervals or in response to particular parameters, pinch valve 12 may serve to accumulate particulates and self-flush them automatically from system 1.

Particle-free fluid from first compartment 11 flows (e.g., is routed or overflows) to second compartment 13, where sensors (not shown) monitor various parameters in the particle-free fluid, such as pH, corrosion, and temperature. Particle-free fluid may then pass from second compartment 13 via overflow 14 or other means to enter retention compartment 15, to be later discarded or recycled back to the spray chamber.

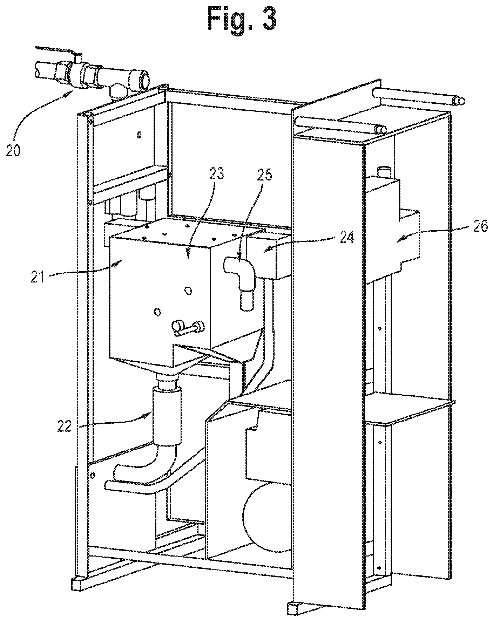

Figures 3-5 illustrate a caster monitoring system according to some embodiments of the invention. Referring to Figure 3, inlet ball valve 20 regulates flow of spray water (i.e., cooling fluid) from the upper zone of a spray chamber of a continuous metal caster into the system. When inlet ball valve 20 is open, spray water enters first compartment 21, where particulate matter settles. The settled particles are periodically flushed by opening automated pinch valve 22 at the bottom of first compartment 21. Particle-free fluid overflows (not shown) to second compartment 23. A separate overflow 24 and emergency overflow 25 permit excess particle-free fluid to flow from second compartment 23. Monitoring board 26 monitors and integrates various parameters in the spray water at different stages of the system using a variety of sensors. Monitoring board 26 may include or be configured to interact with a controller that exerts operational control over various functions, such as opening/closing of inlet ball valve 20, opening/closing of automated pinch valve 22, addition of various chemical additives to the spray water, or adjustments in operational parameters in the spray chamber and/or metal caster generally.

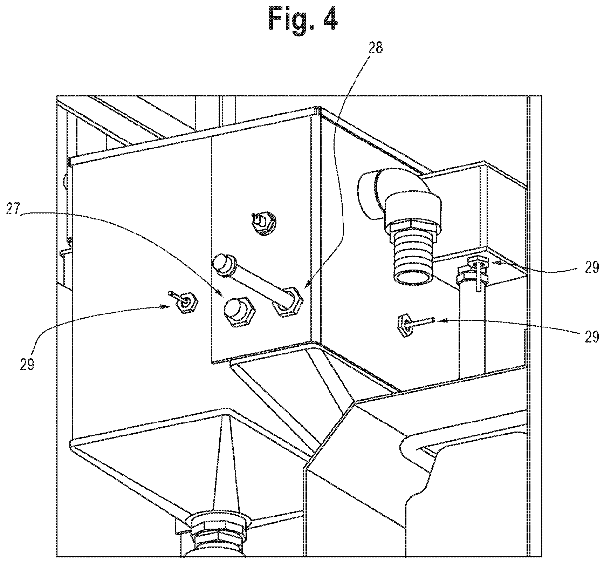

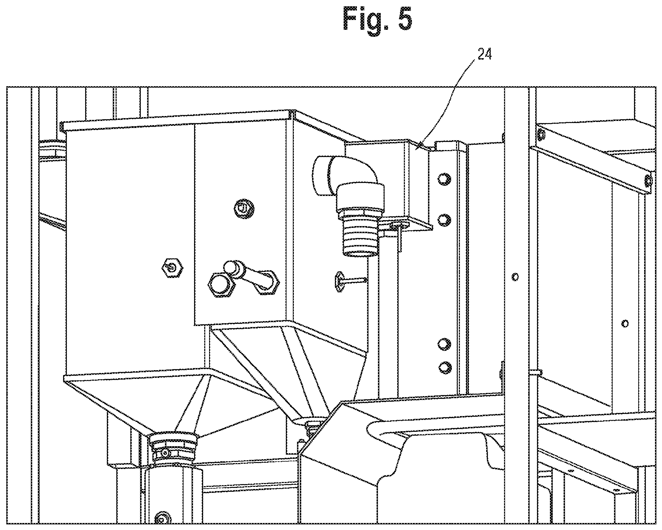

Referring to Figure 4, corrosion monitor 27 measures corrosion, and pH meter 28 measures pH, in second compartment 23. Temperature sensors 29 continuously measure temperature at different zones of the system, including first compartment 21, second compartment 23, and overflow 24. For example, temperature sensors may be situated in first (settling) compartment 21; in second (sensor) compartment 23 to determine the temperature at the pH and corrosion sensors and permit correction of their readings; at the outlet section of the system, to measure temperature in the outlet flow; and/or at automated pinch valve 22 to detect if the drain is blocked. As described herein, the outlet of the system can refer to any of overflow 24, emergency overflow 25, or a separate output conduit, channel, or path (not shown) leading out of second compartment 23. For example, according to the embodiment in Figure 5, an outlet temperature sensor may be present at overflow 24.

In some embodiments, the particle-free fluid has a flow rate from first compartment 21 to second compartment 23 of about 3 L/min to about 100 L/min. In particular embodiments, the flow rate is about 5 L/min to about 50 L/min. Generally, the disclosed system works more efficiently at higher flow rates.

A vacuum element may be utilized with an outlet for draining a first compartment of the disclosed system. For example, a vacuum element may be associated with an automated pinch valve 22 (FIG. 3), the vacuum element having an on position and an off position such that the vacuum element is operable in the off position when the valve is in the closed position and the vacuum element is operable in the on position when the valve is in the open position to remove the particulate matter.

In some embodiments, an automated pinch valve is operated in the open position and the vacuum element is operated in the on position at periodic intervals for about a one minute duration to permit drainage of particulate matter from the first compartment. In certain embodiments, the periodic intervals are selected from about 5 minutes to about 100 minutes, for example, about 15 minute intervals, but longer intervals are also possible, within the scope of the disclosure. The person of skill in the art will understand that the vacuum element and time intervals may be selected to optimize settling of particulates and the self-flushing functionality of the system. Other factors, such as flow rate, density of particles in the spray water, size and shape of the first compartment, and customer preference, may be considered in setting these intervals. It is thus an embodiment of the invention that the intervals are determined dynamically using algorithms that relate flow rate, temperature and other data in the system to set on/off time.

Thus, in a specific embodiment, a system is disclosed for treating cooling fluid in a continuous metal casting process having a spray chamber, the system including a first compartment fluidly coupled to the spray chamber, the first compartment including an pinch valve intermittently operable between an open position and a closed position, wherein particulate matter and cooling fluid passes from the first compartment when the valve is in the open position and is retained in the first compartment when the valve is in the closed position; a vacuum element having an on position and an off position such that the vacuum element is operable in the off position when the valve is in the closed position and the vacuum element is operable in the on position when the valve is in the open position to remove the particulate matter; and a second compartment fluidly coupled to the first compartment, the second compartment operable to receive particle-free fluid from the first compartment.

Thus, a controller may be in communication with an automated pinch valve, temperature sensors, and an alarm, the temperature sensor operable to determine the temperature of the cooling fluid, and the alarm operable to indicate when the temperature is outside of an acceptable limit. In this manner, the operation (opening/closing) of the automated pinch valve can be modified in response to dynamic changes in the system.

In certain embodiments, one or more pumps are in communication with the controller, wherein the one or more pumps are configured to inject at least one chemical into the particle-free fluid to vary the at least one property of the particle-free fluid, forming a treated fluid. The treated fluid may then be recycled to the metal caster, influencing conditions therein.

In one aspect according to the invention, methods are disclosed for treating cooling fluid in a continuous metal casting process having a spray chamber.

In one embodiment, the method includes providing a first compartment coupled to a spray chamber, wherein the first compartment includes an outlet having an open state and a closed state, the outlet operable to remove particulate matter from the first compartment and the cooling fluid when in the open state, defining particle-free fluid, and the outlet retaining the particulate matter in the first compartment and the cooling fluid when in the closed state; and providing a second compartment fluidly coupled to the first compartment, the second compartment operable to receive the particle-free fluid from the first compartment, the second compartment in communication with a one or more sensors operable to measure at least one property of the particle-free fluid such that the particle-free fluid can be reused during the continuous metal casting process.

In another embodiment according to the invention, the method includes configuring a first compartment to a spray chamber, wherein the first compartment includes a valve having an open position and a closed position; receiving cooling fluid including particulate matter in the first compartment; settling the particulate matter from the cooling fluid such that the particulate matter contacts a valve having an open position and a closed position; operating the valve in the open position to remove the particulate matter from the cooling fluid and the first compartment to produce particle-free fluid; flowing the particle-free fluid from the first compartment to a second compartment including one or more sensors operable to measure at least one property of the particle-free fluid; measuring the at least one property of the particle-free fluid with the one or more sensors; determining if the at least one property is within an acceptable range; when the at least one property is outside of the acceptable range, varying the amount of a chemical flowing into the particle-free fluid, the chemical capable of adjusting the at least one property to bring the at least one property within the acceptable range, defining treated fluid; and reusing the treated fluid in the continuous metal casting process, wherein the operating the valve in the open position to remove the particulate matter comprises operating a vacuum element with the valve to suction the particulate matter from the first compartment, characterized in that the at least one property is a temperature of the cooling fluid.

In certain embodiments, receiving cooling fluid including particulate matter in the first compartment includes receiving cooling fluid in a funnel from an upper zone of the spray chamber, the funnel coupled to a hose such that the funnel and hose are fluidly coupled to the first compartment.

A vacuum element may be used in communication with the outlet and/or valve to suction the particulate matter from the first compartment, and the outlet and/or valve and vacuum element may be operated intermittently and together with each other. In certain embodiments, the outlet and/or valve is in fluid communication with a drain. In this way, the outlet and/or valve and vacuum element facilitate a self-flushing (cleaning) function of the system.

In particular embodiments, operating the outlet and/or valve and vacuum element intermittently includes operating the outlet and/or valve and vacuum element at 10-100 minute intervals for a 1 minute duration. In particular embodiments, the valve and vacuum element operate in 15 minute intervals for a 1 minute duration. In a preferred embodiment, the intervals are determined algorithmically, based on flow rates, temperature, turbidity, and/or other factors measured in the system, as disclosed herein.

For example, according to one generalized algorithm, the opening frequency of an outlet and/or valve in the first compartment may be reduced when Tᵢₙₗₑₜ > 35 °C and Tᵢₙₗₑₜ - Tₒᵤₜₗₑₜ > 8-15 °C.

Alternatively, the opening frequency of the outlet and/or valve in the first compartment may be reduced when Tᵢₙₗₑₜ > 35 °C and flow falls below a threshold value.

### EXAMPLES

Validation of a Caster Monitoring Tool Under Field Conditions.

The machinery and superstructure in the spray chamber of slab continuous casters suffer from high corrosion. The applicant is currently working on a program to lower the corrosion on this part of a caster. A key part of the program is a reliable corrosion monitoring tool. This tool is used to monitor and control the corrosivity of the water in the upper zone of the spray chamber, where local frequent pH drops increase the corrosion potential in this zone.

A caster monitoring tool was designed and developed to monitor the quality of spray water collected from the upper zone of a spray chamber of a continuous metal caster. The monitoring tool is capable of autonomously sampling water containing high load of debris/sinter from the upper zone of a spray chamber, separating the debris, and producing a clean water stream that is monitored using different sensors. This device operates based on an automated valve that periodically opens to drain collected debris in a settling chamber. Four key performance indicators were evaluated:
- Autonomous operation for 30 days with minimal accumulation of sinter in the sampling equipment;
- Continuous and reliable monitoring of pH, temperature and corrosion rate for 30 days;
- Detection of production stops based on temperature measurements; and
- Ability to detect overflow from the first compartment to the second compartment.

Sprayed water was collected behind segment 1 during production with a stainless steel funnel (60x60x100cm; Body: 500cm, 37cm height). A filter of a pyramidal shape (55x55x18 cm) was installed on top of the funnel to filter out particles larger than 1 cm. The water with sinter was canalized outside the spray chamber with 14m EPDM hose (2 inch inside diameter) to the inside of the corrosion monitoring tool. The outlet flow and drain recycled fluid back to the spray chamber.

A Schubert & Salzer control valve was used in the initial installation for draining the sinter. This was replaced by an AKO VMC automatic pinch valve to maximize the inner diameter of the valve when opened.

The caster monitoring tool was designed with two separate compartments. Water enters the first compartment, where the sinter settles. *See* FIGS. 3-5. Settled particles were periodically flushed using an automated pinch valve. The particle-free water stream overflowed to the second compartment. In the second compartment, a corrosion monitor, pH meter, and temperature sensor were installed for continuous monitoring. *See* FIGS. 3-5. Data was logged using a controller.

Three temperature sensors were installed in different zones of the equipment:
- Temperature sensor in the first (settling) compartment (Tᵢₙₗₑₜ): This sensor is installed 15cm from the bottom of the setting tank and gets wet when water enters the sensor compartment.
- Temperature sensor installed in the second (sensor) compartment (Tₛₑₙₛₒᵣ): This sensor indicates the temperature at which the sensors (pH and corrosion) are measuring. This temperature can be used to correct the pH reading.
- Temperature sensor installed at the outlet section at overflow 24 (Tₒᵤₜₗₑₜ): This sensor detects and measures flow in the outlet.

The automated pinch valve on the outlet was actuated by a solenoid valve and a timer. The timer of the pinch valve can be manually adjusted to vary the residence time of the water inside the equipment. During testing, the pinch valve was opened every 15 min and kept opened for 1 minute to ensure that all the settled debris was well flushed. A vacuum system was coupled to the pinch valve and actuated at the same time to maximize the opening of the valve.

Water samples from the caster monitoring tool were taken twice a week to validate the pH measurements recorded on a controller. In parallel, temperatures, water flow, and particle settling was visually monitored to evaluate the dynamics of the water inside the equipment during production.

KPI 1: Autonomous operation for 30 days with minimal accumulation of sinter in the sampling equipment.

The design of the settling tank proved to be suitable to settle sinter from the water stream collected from the spray chamber. Clear water overflowed from the settling tank to the sensor compartment with minimum sinter depositing in the sensor compartment.

The use of an AKO VMC automated pinch valve with a vacuum unit attached allowed the inner diameter of the valve opening to be maximized. This effectively prevented clogging of the valve. Every 15 min, the pinch valve opened for 1 minute and the valve was vacuumed with - 1 bar to maintain the inside diameter at 2 inches.

The inside of the equipment was cleaned only once per month. Overall, the sinter effectively settled and was drained by the automated valve with only minimum maintenance. These results validate the first KPI.

KPI 2. Continuous and reliable monitoring of pH, temperature and corrosion rate for 30 days.

The pH, temperature and corrosion of the cooling fluid were monitored every 5 minutes with the controller.

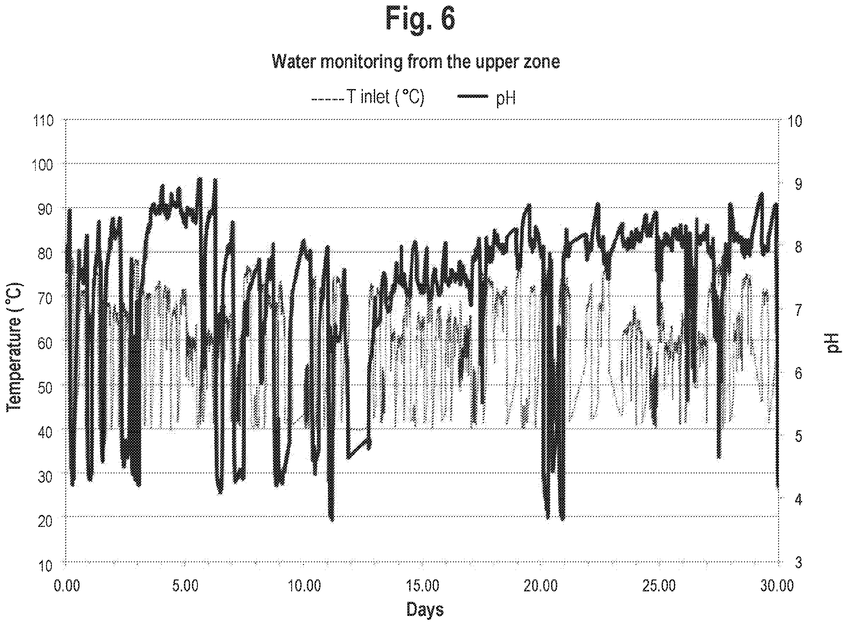

Figure 6 illustrates pH vs. temperature in the settling tank during production (Tᵢₙₗₑₜ > 40°C). pH (bold/continuous line) readings were measured every 5 minutes. The pH of the water collected from the spray chamber varied from 3.9 to 8.5, depending on the casting conditions. The design of the equipment allowed easy calibration of the probe as needed. Frequent cleaning and calibration of a pH probe is expected with this type of water due to formation of deposits on the probe surface. Water samples were taken to verify the monitored values with the controller and the unit was calibrated as needed.

As shown in Figure 6, the system was able to collect reliable pH data for more than one month. The pH probe was also able to withstand swings in temperature from room temperature to 80°C (dotted line).

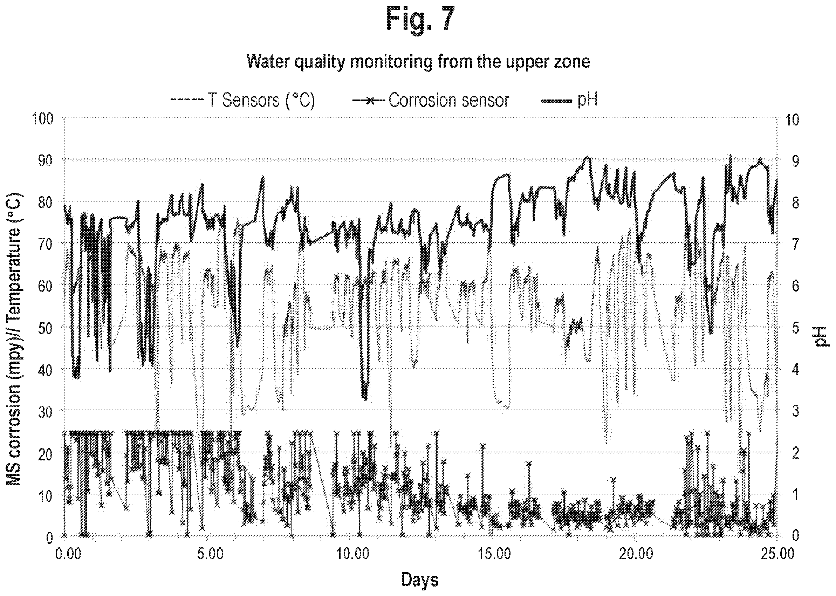

Figure 7 is a plot showing pH, online corrosion, and temperature during production (Tᵢₙₗₑₜ > 40°C). Figure 7 shows the corrosion reading over time (line with "x" marks), expressed in mili-inches per year (mpy). As shown, high temperatures (dotted line) and low pH (bold/continuous line) correlated with an increased corrosion rate. The monitoring device proved suitable to indicate changes in corrosivity of the sampled water inside the spray chamber.

Temperature in the inlet, sensor chamber, and outlet was continuously recorded, without any issues. This data is needed to correct the pH measurements and to detect overflow from one section of the equipment to the next. Temperature is also a key parameter to monitor because of its impact on corrosion.

The results for pH, temperature, and corrosion validate the operation of the system related to KPI 2, giving continuous and reliable data of these parameters for over one month.

KPI 3. Detection of production stops based on temperature measurements.

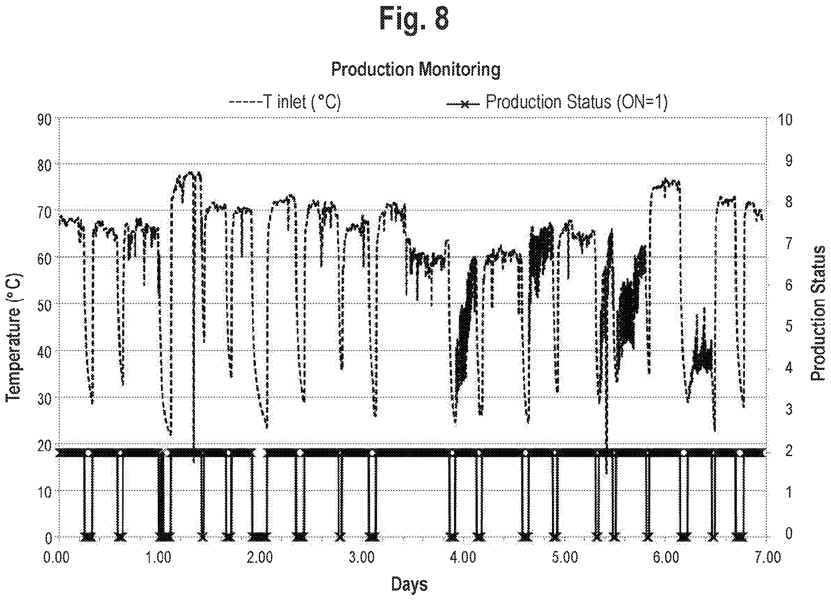

FIG. 8 compares the temperature inside the settling tank (Tᵢₙₗₑₜ) (dashed line), with production status in the metal caster.

The production (bold/continuous line) in FIG. 8 indicates with values of 1 that the caster was producing based on spray flow data over a seven day sample period. Within 56 days, a Tᵢₙₗₑₜ above 40°C corresponded to production 94.99% of the time. This value of 40°C could therefore be used to monitor production with a high level of accuracy and validates the operation of the system related to KPI 3.

KPI 4. Ability to detect overflow from the first compartment to second compartment.

Water flow during production varies depending on the steel grade manufactured. In order to obtain reliable data, it is therefore important to detect if flow is high enough to have overflow from the settling tank to the sensor tank.

Data obtained from the corrosion monitoring tool showed that for temperatures above 40°C (production), the difference between Tₒᵤₜₗₑₜ and Tᵢₙₗₑₜ could be used to detect overflow. A difference above 10°C indicated no overflow.

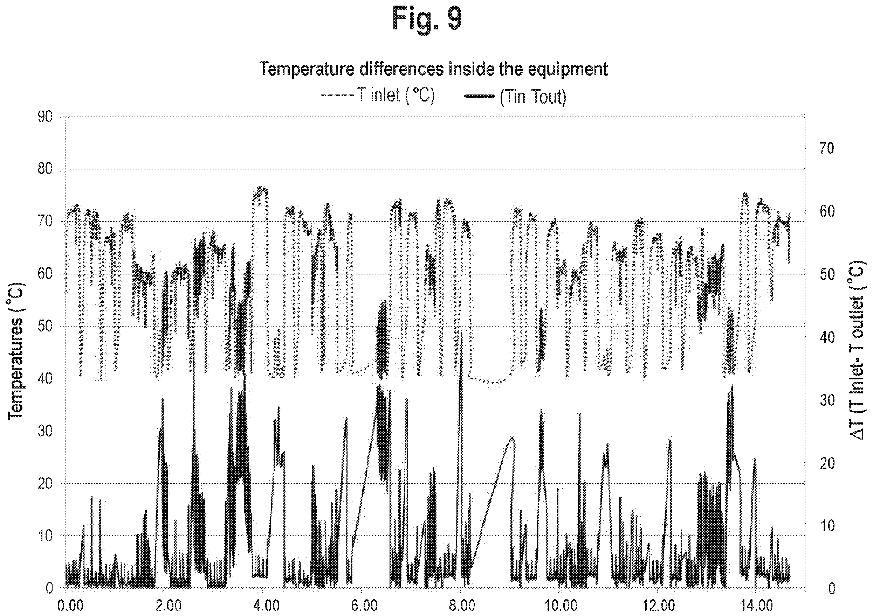

Figure 9 shows water temperatures inside the monitoring equipment over time. The automated pinch valve was set with an opening frequency of 15 min and kept open for 1 minute.

In FIG 9, the flow on day 3.5 and 7 was too low to overflow from the settling tank to the sensor compartment. Consequently, the temperature in the inlet (dotted line) was above 40°C, but the temperature at the outlet was lower. The difference between the two temperatures (Bold line) indicates the difference in flow.

These results meet the requirements for KPI 4.

Operational window.

Considering that the volume of the settling tank was 26.9 L, with an interval of 15 minutes for opening the pinch valve, it was recommended to have a minimum flow of 5.4 L/min so that the settling tank refills in a maximum of 5 min. Thus, an operational window of about 5.4 L/min to about 100 L/min was established.

The caster monitoring tool proved to be suitable for separating sinter particles from spray water and providing a clean stream that could be continuously monitored. The equipment reliably measured:
- Representative pH and temperature of the collected water;
- Production status, indicating, for example, when Tᵢₙₗₑₜ > 40°C;
- Corrosivity of the water
- Presence of overflow from the settling to the sensor compartment

In addition, the caster monitoring tool can be used to locally control the pH of the upper zone of a spray chamber and consequently, reduce corrosion. The caster monitoring tool effectively extends the period between required maintenance, thus requiring maintenance only once per month (i.e., about 30 days), for example.

All of the devices, compositions and methods disclosed and claimed herein can be made and executed without undue experimentation in light of the present disclosure. While this invention may be embodied in many different forms, there are described in detail herein specific embodiments of the invention. The present disclosure is an exemplification of the principles of the invention and is not intended to limit the invention to the particular embodiments illustrated. In addition, unless expressly stated to the contrary, use of the term "a" is intended to include "at least one" or "one or more." For example, "a device" is intended to include "at least one device" or "one or more devices."

Any ranges given either in absolute terms or in approximate terms are intended to encompass both, and any definitions used herein are intended to be clarifying and not limiting. Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard deviation found in their respective testing measurements. Moreover, all ranges disclosed herein are to be understood to encompass any and all subranges (including all fractional and whole values) subsumed therein.

## Claims

1. A system for treating cooling fluid in a continuous metal casting process having a spray chamber, the system comprising:
- a first compartment (11; 21) fluidly coupled to the spray chamber, the first compartment (11; 21) including an outlet intermittently operable between an open state and a closed state, wherein particulate matter and cooling fluid passes from the first compartment (11; 21) when the outlet is in the open state and is retained in the first compartment (11; 21) when the outlet is in the closed state;
- a second compartment (13; 23) fluidly coupled to the first compartment (11; 21), the second compartment (13; 23) being operable to receive particle-free fluid from the first compartment (11; 21); and
- a vacuum element in communication with the outlet, the vacuum element having an on position and an off position such that the vacuum element is operable in the off position when the outlet is in the closed state and the vacuum element is operable in the on position when the outlet is in the open state to remove the particulate matter;
**characterized in that** the outlet transitions between an open state and a closed state by operation of a valve located at the outlet; wherein the valve is in communication with a plurality of temperature sensors via a controller and an alarm, the temperature sensors being operable to determine the temperature of the cooling fluid at different zones of the system, including the first compartment (21), the second compartment (23) and an overflow (24), and the alarm being operable to indicate when the temperature is outside of an acceptable limit.

2. The system of claim 1, wherein the system is configured to allow the particle-free fluid to overflow from the first compartment (11; 21) to the second compartment (13; 23), and/or wherein at least one of the first compartment (11; 21) or the second compartment (13; 23) comprises a rack or a pipe.

3. The system of claim 1 or claim 2, wherein the second compartment (13; 23) is in communication with one or more sensors operable to measure at least one property of the particle-free fluid.

4. The system of claim 3, wherein the at least one property is selected from the group consisting of conductivity, pH, oxidation/reduction potential, corrosion, biocide concentration, turbidity, temperature, flow, overflow dissolved oxygen, total suspended solids, ion concentration, and total dissolved solids.

5. The system of claim 3, wherein the one or more sensors and the outlet are in communication with a controller, the controller being actuated by at least one algorithm to determine the open state or closed state of the outlet, the system preferably further comprising one or more pumps in communication with the controller, wherein the one or more pumps are configured to inject at least one chemical into the particle-free fluid to vary the at least one property of the particle-free fluid.

6. The system of any one of claims 1 to 5, wherein the particle-free fluid has a flow rate from the first compartment (11; 21) to the second compartment (13; 23) of 5.4 L/min to 100 L/min.

7. The system of any one of claims 1 to 6, wherein the outlet is in the open state and the vacuum element is operated in the on position at periodic intervals for a one minute duration, depending on the flow rate, Tᵢₙₗₑₜ, or the turbidity of particle-free fluid entering the second compartment (13, 23), or depending on a signal from an operator.

8. A method for treating cooling fluid in a continuous metal casting process having a spray chamber, the method comprising:
providing a system according to any of preceding claims;
configuring a first compartment (11; 21) to a spray chamber, wherein the first compartment (11; 21) includes a valve having an open position and a closed position;
receiving cooling fluid including particulate matter in the first compartment (11; 21);
settling the particulate matter from the cooling fluid such that the particulate matter contacts a valve having an open position and a closed position;
operating the valve in the open position to remove the particulate matter from the cooling fluid and the first compartment (11; 21) to produce particle-free fluid;
flowing the particle-free fluid from the first compartment (11; 21) to a second compartment (13; 23) including one or more sensors operable to measure at least one property of the particle-free fluid;
measuring the at least one property of the particle-free fluid using the one or more sensors;
determining if the at least one property is within an acceptable range;
when the at least one property is outside of the acceptable range, varying the amount of a chemical flowing into the particle-free fluid, the chemical being capable of adjusting the at least one property to bring the at least one property within the acceptable range, defining treated fluid; and
reusing the treated fluid in the continuous metal casting process;
wherein the operating the valve in the open position to remove the particulate matter comprises operating a vacuum element using the valve to suction the particulate matter from the first compartment (11; 21);
**characterized in that** the at least one property is a temperature of the cooling fluid.

9. The method of claim 8, wherein receiving cooling fluid including particulate matter in the first compartment (11; 21) includes receiving cooling fluid in a funnel from an upper zone of the spray chamber, the funnel being coupled to a hose such that the funnel and hose are fluidly coupled to the first compartment (11; 21).

10. The method of claim 8 or claim 9, wherein the valve and the vacuum element are operated intermittently and together with each other, preferably wherein operating the valve and vacuum element intermittently includes operating the valve and vacuum element at 15 minute intervals for a 1 minute duration.

11. The method of any one of claims 8 to 10, wherein flowing the particle-free fluid from the first compartment (11; 21) to the second compartment (13; 23) comprises overflowing the particle-free fluid from the first compartment (11; 21) to the second compartment (13; 23), and/or
wherein the at least one property is selected from the group consisting of conductivity, corrosion, pH, oxidation/reduction potential, biocide concentration, turbidity, flow, overflow dissolved oxygen, total suspended solids, ion concentration, and total dissolved solids.

12. Use of a system for treating cooling fluid in a continuous metal casting process having a spray chamber, the system comprising:
- a first compartment (11; 21) fluidly coupled to the spray chamber, the first compartment (11; 21) including an outlet intermittently operable between an open state and a closed state, wherein particulate matter and cooling fluid passes from the first compartment (11; 21) when the outlet is in the open state and is retained in the first compartment (11; 21) when the outlet is in the closed state;
- a second compartment (13; 23) fluidly coupled to the first compartment (11; 21), the second compartment (13; 23) being operable to receive particle-free fluid from the first compartment (11; 21); and
- a vacuum element in communication with the outlet, the vacuum element having an on position and an off position such that the vacuum element is operable in the off position when the outlet is in the closed state and the vacuum element is operable in the on position when the outlet is in the open state to remove the particulate matter;
**characterized in that** the outlet transitions between an open state and a closed state by operation of a valve located at the outlet; wherein the valve is in communication with a plurality of temperature sensors via a controller and an alarm, the temperature sensors operable to determine the temperature of the cooling fluid at different zones of the system, including the first compartment (21), the second compartment (23) and an overflow (24), and the alarm being operable to indicate when the temperature is outside of an acceptable limit.

## Patentansprüche

1. System zum Behandeln von Kühlfluid in einem kontinuierlichen Metallgießprozess, der eine Sprühkammer aufweist, das System umfassend:
- ein erstes Abteil (11; 21), das mit der Sprühkammer fluidisch gekoppelt ist, wobei das erste Abteil (11; 21) einen Auslass einschließt, der zwischen einem offenen Zustand und einem geschlossenen Zustand intermittierend betriebsfähig ist, wobei Schwebstoffe und Kühlfluid aus dem ersten Abteil (11; 21) austreten, wenn sich der Auslass in dem offenen Zustand befindet, und in dem ersten Abteil (11; 21) zurückgehalten werden, wenn sich der Auslass in dem geschlossenen Zustand befindet;
- ein zweites Abteil (13; 23), das mit dem ersten Abteil (11; 21) fluidisch gekoppelt ist, wobei das zweite Abteil (13; 23) betriebsfähig ist, um partikelfreies Fluid aus dem ersten Abteil (11; 21) aufzunehmen; und
- ein Vakuumelement, das mit dem Auslass in Kommunikation steht, wobei das Vakuumelement eine Ein-Position und eine Aus-Position derart aufweist, dass das Vakuumelement in der Aus-Position betriebsfähig ist, wenn sich der Auslass in dem geschlossenen Zustand befindet, und das Vakuumelement in der Ein - Position betriebsfähig ist, wenn sich der Auslass in dem offenen Zustand befindet, um die Schwebstoffe zu entfernen;
**dadurch gekennzeichnet, dass** der Auslass durch Bedienung eines Ventils, das an dem Auslass angeordnet ist, zwischen einem offenen Zustand und einem geschlossenen Zustand wechselt; wobei das Ventil über eine Steuerung und einen Alarm mit einer Vielzahl von Temperatursensoren in Kommunikation steht, wobei die Temperatursensoren betriebsfähig sind, um die Temperatur des Kühlfluids in unterschiedlichen Zonen des Systems zu bestimmen, einschließlich des ersten Abteils (21), des zweiten Abteils (23) und einer Überströmung (24), und wobei der Alarm betriebsfähig ist, um anzuzeigen, wenn die Temperatur außerhalb eines akzeptablen Grenzwerts liegt.

2. System nach Anspruch 1, wobei das System konfiguriert ist, um zu ermöglichen, dass das partikelfreie Fluid von dem ersten Abteil (11; 21) in das zweite Abteil (13; 23) überströmt, und/oder wobei mindestens eines des ersten Abteils (11; 21) oder des zweiten Abteils (13; 23) ein Gestell oder ein Rohr umfasst.

3. System nach Anspruch 1 oder 2,
wobei das zweite Abteil (13; 23) mit einem oder mehreren Sensoren in Kommunikation steht, die betriebsfähig sind, um mindestens eine Eigenschaft des partikelfreien Fluids zu messen.

4. System nach Anspruch 3, wobei die mindestens eine Eigenschaft aus der Gruppe ausgewählt ist, bestehend aus Leitfähigkeit, pH-Wert, Oxidations-/Reduktionspotential, Korrosion, Biozidkonzentration, Trübung, Temperatur, Strömung, gelöstem Sauerstoff in Überströmung, gesamten suspendierten Feststoffen, Ionenkonzentration und gesamten gelösten Feststoffen.

5. System nach Anspruch 3, wobei der eine oder die mehreren Sensoren und der Auslass in Kommunikation mit einer Steuerung stehen, wobei die Steuerung durch mindestens einen Algorithmus betätigt wird, um den offenen Zustand oder geschlossenen Zustand des Auslasses zu bestimmen, das System vorzugsweise ferner umfassend eine oder mehrere Pumpen, die in Kommunikation mit der Steuerung stehen, wobei die eine oder die mehreren Pumpen konfiguriert sind, um mindestens eine Chemikalie in das partikelfreie Fluid zu injizieren, um die mindestens eine Eigenschaft des partikelfreien Fluids zu variieren.

6. System nach einem der Ansprüche 1 bis 5, wobei das partikelfreie Fluid eine Strömungsgeschwindigkeit von dem ersten Abteil (11; 21) zu dem zweiten Abteil (13; 23) von 5,4 L/min bis 100 L/min aufweist.

7. System nach einem der Ansprüche 1 bis 6, wobei sich der Auslass in dem offenen Zustand befindet und das Vakuumelement in periodischen Intervallen für eine Dauer von einer Minute in der Ein-Position bedient wird, abhängig von der Strömungsgeschwindigkeit, T_{Einlass}, oder der Trübung von partikelfreiem Fluid, das in das zweite Abteil (13, 23) eintritt, oder abhängig von einem Signal eines Bedieners.

8. Verfahren zum Behandeln von Kühlfluid in einem kontinuierlichen Metallgießprozess, der eine Sprühkammer aufweist, das Verfahren umfassend:
Bereitstellen eines Systems nach einem der vorstehenden Ansprüche;
Konfigurieren eines ersten Abteils (11; 21) zu einer Sprühkammer, wobei das erste Abteil (11; 21) ein Ventil aufweist, das eine offene Stellung und eine geschlossene Stellung einschließt; Aufnehmen von Kühlfluid, das Schwebstoffe einschließt, in dem ersten Abteil (11; 21);
Absetzen der Schwebstoffe aus dem Kühlfluid derart, dass die Schwebstoffe ein Ventil kontaktiert, das eine offene Position und eine geschlossene Position aufweist;
Bedienen des Ventils in der offenen Position, um die Schwebstoffe aus dem Kühlfluid und dem ersten Abteil (11; 21) zu entfernen, um partikelfreies Fluid zu erzeugen;
Strömen des partikelfreien Fluids aus dem ersten Abteil (11; 21) in ein zweites Abteil (13; 23), das einen oder mehrere Sensoren einschließt, die betriebsfähig sind, um mindestens eine Eigenschaft des partikelfreien Fluids zu messen;
Messen der mindestens einen Eigenschaft des partikelfreien Fluids unter Verwendung des einen oder der mehreren Sensoren;
Bestimmen, ob die mindestens eine Eigenschaft innerhalb eines akzeptablen Bereichs liegt;
wenn die mindestens eine Eigenschaft außerhalb des akzeptablen Bereichs liegt, Variieren der Menge einer Chemikalie, die in das partikelfreie Fluid strömt, wobei die Chemikalie in der Lage ist, die mindestens eine Eigenschaft einzustellen, um die mindestens eine Eigenschaft innerhalb des akzeptablen Bereichs zu bringen, wodurch behandeltes Fluid definiert wird; und
Wiederverwenden des behandelten Fluids in dem kontinuierlichen Metallgießprozess;
wobei das Bedienen des Ventils in der offenen Position, um die Schwebstoffe zu entfernen, das Bedienen eines Vakuumelements unter Verwendung des Ventils umfasst, um die Schwebstoffe aus dem ersten Abteil (11; 21) abzusaugen;
**dadurch gekennzeichnet, dass** die mindestens eine Eigenschaft eine Temperatur des Kühlfluids ist.

9. Verfahren nach Anspruch 8, wobei das Aufnehmen von Kühlfluid, das Schwebstoffe einschließt, in dem ersten Abteil (11; 21) das Aufnehmen von Kühlfluid in einem Trichter aus einer oberen Zone der Sprühkammer einschließt, wobei der Trichter mit einem Schlauch derart gekoppelt ist, dass der Trichter und der Schlauch mit dem ersten Abteil (11; 21) fluidisch gekoppelt sind.

10. Verfahren nach Anspruch 8 oder 9, wobei das Ventil und das Vakuumelement intermittierend und zusammen miteinander bedient werden, vorzugsweise wobei das intermittierende Bedienen des Ventils und des Vakuumelements das Bedienen des Ventils und des Vakuumelements in 15-Minuten-Intervallen für eine Dauer von 1 Minute einschließt.

11. Verfahren nach einem der Ansprüche 8 bis 10, wobei das Strömen des partikelfreien Fluids von dem ersten Abteil (11; 21) zu dem zweiten Abteil (13; 23) das Überströmen des partikelfreien Fluids von dem ersten Abteil (11; 21) zu dem zweiten Abteil (13; 23) umfasst, und/oder
wobei die mindestens eine Eigenschaft aus der Gruppe ausgewählt ist, bestehend aus Leitfähigkeit, Korrosion, pH-Wert, Oxidations-/Reduktionspotential, Biozidkonzentration, Trübung, Strömung, gelöstem Sauerstoff in Überströmung, gesamten suspendierten Feststoffen, Ionenkonzentration und gesamten gelösten Feststoffen.

12. Verwendung eines Systems zum Behandeln von Kühlfluid in einem kontinuierlichen Metallgießprozess, der eine Sprühkammer aufweist, das System umfassend:
- ein erstes Abteil (11; 21), das mit der Sprühkammer fluidisch gekoppelt ist, wobei das erste Abteil (11; 21) einen Auslass einschließt, der zwischen einem offenen Zustand und einem geschlossenen Zustand intermittierend betriebsfähig ist, wobei Schwebstoffe und Kühlfluid aus dem ersten Abteil (11; 21) austreten, wenn sich der Auslass in dem offenen Zustand befindet, und in dem ersten Abteil (11; 21) zurückgehalten werden, wenn sich der Auslass in dem geschlossenen Zustand befindet;
- ein zweites Abteil (13; 23), das mit dem ersten Abteil (11; 21) fluidisch gekoppelt ist, wobei das zweite Abteil (13; 23) betriebsfähig ist, um partikelfreies Fluid aus dem ersten Abteil (11; 21) aufzunehmen; und
- ein Vakuumelement, das mit dem Auslass in Kommunikation steht, wobei das Vakuumelement eine Ein-Position und eine Aus-Position derart aufweist, dass das Vakuumelement in der Aus-Position betriebsfähig ist, wenn sich der Auslass in dem geschlossenen Zustand befindet, und das Vakuumelement in der Ein-Position betriebsfähig ist, wenn sich der Auslass in dem offenen Zustand befindet, um die Schwebstoffe zu entfernen;
**dadurch gekennzeichnet, dass** der Auslass durch Bedienung eines Ventils, das an dem Auslass angeordnet ist, zwischen einem offenen Zustand und einem geschlossenen Zustand wechselt; wobei das Ventil über eine Steuerung und einen Alarm mit einer Vielzahl von Temperatursensoren in Kommunikation steht, wobei die Temperatursensoren betriebsfähig sind, um die Temperatur des Kühlfluids in unterschiedlichen Zonen des Systems zu bestimmen, einschließlich des ersten Abteils (21), des zweiten Abteils (23) und einer Überströmung (24), und wobei der Alarm betriebsfähig ist, um anzuzeigen, wenn die Temperatur außerhalb eines akzeptablen Grenzwerts liegt.

## Revendications

1. Système de traitement de fluide de refroidissement dans un procédé de coulée continue de métal ayant une chambre de pulvérisation, le système comprenant :
- un premier compartiment (11 ; 21) accouplé fluidiquement à la chambre de pulvérisation, le premier compartiment (11 ; 21) comprenant une sortie actionnable par intermittence entre un état ouvert et un état fermé, dans lequel la matière particulaire et le fluide de refroidissement passent depuis le premier compartiment (11 ; 21) lorsque la sortie est à l'état ouvert et sont retenus dans le premier compartiment (11 ; 21) lorsque la sortie est à l'état fermé ;
- un second compartiment (13 ; 23) accouplé fluidiquement au premier compartiment (11 ; 21), le second compartiment (13 ; 23) étant apte à recevoir un fluide exempt de particules en provenance du premier compartiment (11 ; 21) ; et
- un élément d'aspiration en communication avec la sortie, l'élément d'aspiration ayant une position de marche et une position d'arrêt de telle sorte que l'élément d'aspiration est actionnable dans la position d'arrêt lorsque la sortie est à l'état fermé et que l'élément d'aspiration est actionnable dans la position de marche lorsque la sortie est à l'état ouvert pour retirer la matière particulaire ;
**caractérisé en ce que** la sortie effectue une transition entre un état ouvert et un état fermé par l'actionnement d'une vanne située à la sortie ; dans lequel la vanne est en communication avec une pluralité de capteurs de température par l'intermédiaire d'un dispositif de commande et d'une alarme, les capteurs de température étant aptes à déterminer la température du fluide de refroidissement dans différentes zones du système, y compris le premier compartiment (21), le second compartiment (23) et un trop-plein (24), et l'alarme étant apte à indiquer lorsque la température est en dehors d'une limite acceptable.

2. Système selon la revendication 1, dans lequel le système est configuré pour permettre au fluide exempt de particules de déborder du premier compartiment (11 ; 21) vers le second compartiment (13 ; 23), et/ou dans lequel au moins l'un du premier compartiment (11 ; 21) ou du second compartiment (13 ; 23) comprend un support ou un tuyau.

3. Système selon la revendication 1 ou 2,
dans lequel le second compartiment (13 ; 23) est en communication avec un ou plusieurs capteurs aptes à mesurer au moins une propriété du fluide exempt de particules.

4. Système selon la revendication 3, dans lequel l'au moins une propriété est choisie dans le groupe constitué par la conductivité, le pH, le potentiel d'oxydoréduction, la corrosion, la concentration en biocide, la turbidité, la température, le débit, l'oxygène dissous de trop-plein, les solides en suspension totaux, la concentration en ions et les solides dissous totaux.

5. Système selon la revendication 3, dans lequel le ou les capteurs et la sortie sont en communication avec un dispositif de commande, le dispositif de commande étant actionné par au moins un algorithme pour déterminer l'état ouvert ou l'état fermé de la sortie, le système comprenant en outre de préférence une ou plusieurs pompes en communication avec le dispositif de commande, dans lequel la ou les pompes sont configurées pour injecter au moins un produit chimique dans le fluide exempt de particules pour faire varier l'au moins une propriété du fluide exempt de particules.

6. Système selon l'une quelconque des revendications 1 à 5, dans lequel le fluide exempt de particules a un débit du premier compartiment (11 ; 21) au second compartiment (13 ; 23) de 5,4 L/min à 100 L/min.

7. Système selon l'une quelconque des revendications 1 à 6, dans lequel la sortie est à l'état ouvert et l'élément de vide est actionné en position de marche à des intervalles périodiques pour une durée d'une minute, en fonction du débit, de T_{entrée}, ou de la turbidité du fluide exempt de particules entrant dans le second compartiment (13, 23), ou en fonction d'un signal provenant d'un opérateur.

8. Procédé de traitement d'un fluide de refroidissement dans un processus de coulée continue de métal comportant une chambre de pulvérisation, le procédé comprenant :
la fourniture d'un système selon l'une quelconque des revendications précédentes ;
la configuration d'un premier compartiment (11 ; 21) sur une chambre de pulvérisation, dans lequel le premier compartiment (11 ; 21) comprend une vanne ayant une position ouverte et une position fermée ; la réception d'un fluide de refroidissement comprenant de la matière particulaire dans le premier compartiment (11 ; 21) ;
la décantation de la matière particulaire du fluide de refroidissement de telle sorte que la matière particulaire entre en contact avec une vanne ayant une position ouverte et une position fermée ;
l'actionnement de la vanne dans la position ouverte pour éliminer la matière particulaire du fluide de refroidissement et du premier compartiment (11 ; 21) afin de produire un fluide exempt de particules ;
l'écoulement du fluide exempt de particules du premier compartiment (11 ; 21) vers un second compartiment (13 ; 23) comprenant un ou plusieurs capteurs aptes à mesurer au moins une propriété du fluide exempt de particules ;
la mesure de l'au moins une propriété du fluide exempt de particules à l'aide des un ou plusieurs capteurs ;
le fait de déterminer si l'au moins une propriété est comprise dans une plage acceptable ;
lorsque l'au moins une propriété est en dehors de la plage acceptable, la variation de la quantité d'un produit chimique s'écoulant dans le fluide exempt de particules, le produit chimique étant capable d'ajuster l'au moins une propriété pour amener l'au moins une propriété dans la plage acceptable, définissant un fluide traité ; et
la réutilisation du fluide traité dans le procédé de coulée continue de métal ;
dans lequel l'actionnement de la vanne dans la position ouverte pour retirer la matière particulaire comprend l'actionnement d'un élément de vide à l'aide de la vanne pour aspirer la matière particulaire à partir du premier compartiment (11 ; 21) ;
**caractérisé en ce que** l'au moins une propriété est une température du fluide de refroidissement.

9. Procédé selon la revendication 8, dans lequel la réception du fluide de refroidissement comprenant de la matière particulaire dans le premier compartiment (11 ; 21) comprend la réception du fluide de refroidissement dans un entonnoir à partir d'une zone supérieure de la chambre de pulvérisation, l'entonnoir étant accouplé à un tuyau de telle sorte que l'entonnoir et le tuyau sont accouplés fluidiquement au premier compartiment (11 ; 21).

10. Procédé selon la revendication 8 ou la revendication 9, dans lequel la vanne et l'élément de vide sont actionnés par intermittence et conjointement avec l'un l'autre, de préférence dans lequel l'actionnement de la vanne et de l'élément de vide par intermittence comprend l'actionnement de la vanne et de l'élément de vide à des intervalles de 15 minutes pour une durée de 1 minute.

11. Procédé selon l'une quelconque des revendications 8 à 10, dans lequel l'écoulement du fluide exempt de particules du premier compartiment (11 ; 21) au second compartiment (13 ; 23) comprend le débordement du fluide exempt de particules du premier compartiment (11 ; 21) au second compartiment (13 ; 23), et/ou
dans lequel l'au moins une propriété est choisie dans le groupe constitué par la conductivité, la corrosion, le pH, le potentiel d'oxydoréduction, la concentration en biocide, la turbidité, le débit, l'oxygène dissous de débordement, les solides en suspension totaux, la concentration en ions et les solides dissous totaux.

12. Utilisation d'un système de traitement de fluide de refroidissement dans un procédé de coulée continue de métal ayant une chambre de pulvérisation, le système comprenant :
- un premier compartiment (11 ; 21) accouplé fluidiquement à la chambre de pulvérisation, le premier compartiment (11 ; 21) comprenant une sortie actionnable par intermittence entre un état ouvert et un état fermé, dans lequel la matière particulaire et le fluide de refroidissement passent depuis le premier compartiment (11 ; 21) lorsque la sortie est à l'état ouvert et sont retenus dans le premier compartiment (11 ; 21) lorsque la sortie est à l'état fermé ;
- un second compartiment (13 ; 23) accouplé fluidiquement au premier compartiment (11 ; 21), le second compartiment (13 ; 23) étant apte à recevoir un fluide exempt de particules en provenance du premier compartiment (11 ; 21) ; et
- un élément d'aspiration en communication avec la sortie, l'élément d'aspiration ayant une position de marche et une position d'arrêt de telle sorte que l'élément d'aspiration est actionnable dans la position d'arrêt lorsque la sortie est à l'état fermé et que l'élément d'aspiration est actionnable dans la position de marche lorsque la sortie est à l'état ouvert pour retirer la matière particulaire ;
**caractérisé en ce que** la sortie effectue une transition entre un état ouvert et un état fermé par l'actionnement d'une vanne située à la sortie ; dans lequel la vanne est en communication avec une pluralité de capteurs de température par l'intermédiaire d'un dispositif de commande et d'une alarme, les capteurs de température étant aptes à déterminer la température du fluide de refroidissement au niveau de différentes zones du système, y compris le premier compartiment (21), le second compartiment (23) et un trop-plein (24), et l'alarme étant apte à indiquer lorsque la température est en dehors d'une limite acceptable.
